# EUROPÄISCHE PATENTSCHRIFT

(11) **EP 2 791 801 B1**
(45) Veröffentlichungstag und Bekanntmachung des Hinweises auf die Patenterteilung: **30.09.2015**
(21) Anmeldenummer: 13709731.7
(22) Anmeldetag: 20.02.2013
(51) Int. Cl.: G06F 11/16, G06F 11/22, G06F 11/07

(54) **VERFAHREN ZUR FEHLERERKENNUNG IN EINEM SYSTEM-OF-SYSTEMS**
METHOD FOR FAULT RECOGNITION IN A SYSTEM OF SYSTEMS
PROCÉDÉ DE DÉTECTION D'ERREURS DANS UN SYSTÈME DE SYSTÈMES

(30) Priorität: 22.02.2012 AT 2272012
(43) Veröffentlichungstag der Anmeldung: 22.10.2014
(73) Patentinhaber: FTS Computertechnik GmbH, 1040 Wien (AT)
(72) Erfinder: POLEDNA, Stefan, A-3400 Klosterneuburg (AT)
(74) Vertreter: Patentanwaltskanzlei Matschnig & Forsthuber OG
(86) Internationale Anmeldenummer: PCT/AT2013/050043
(87) Internationale Veröffentlichungsnummer: WO 2013/123543

(56) Entgegenhaltungen:
- EP-A2- 0 246 218
- WO-A1-2009/108978
- WO-A1-2011/003121
- WO-A2-02/31656
- KOPETZ H ET AL: "TTP - A PROTOCOL FOR FAULT-TOLERANT REAL-TIME SYSTEMS", COMPUTER, IEEE SERVICE CENTER, LOS ALAMITOS, CA, US, Bd. 27, Nr. 1, 1. Januar 1994 (1994-01-01) , Seiten 14-23, XP000426338, ISSN: 0018-9162, DOI: 10.1109/2.248873

## Beschreibung

Die Erfindung betrifft ein Verfahren zur Fehlererkennung in einem Fault-Containments-Units (FCUs) umfassenden verteilten Echtzeitcomputersystem, insbesondere einem fehlertoleranten System-of-Systems (SoS), welches über eine globale Zeitbasis verfügt.

Weiters betrifft die Erfindung ein verteiltes Echtzeitcomputersystem, insbesondere ein System-of-Systems, umfassend Fault-Containments-Units.

Außerdem betrifft die Erfindung eine Nachrichtenverteileinheit für ein solches Echtzeitcomputersystem.

Die vorliegende Erfindung liegt im Bereich der Computertechnik. Sie beschreibt ein innovatives Verfahren, wie in einem verteilten Echtzeitcomputersystem, insbesondere in einem *System-of-Systems* die funktionale Verarbeitung und die Fehlererkennung parallelisiert werden können, um die Fehlertoleranz zu verbessern und die Antwortzeit zu verkürzen.

Ein verteiltes Echtzeitcomputersystem, insbesondere ein System-of-Systems (SoS), das aus einer Vielzahl von autonomen Subsystemen besteht, muss Fehler von Subsystemen erkennen und nach Möglichkeit tolerieren. Erfahrungsgemäß ist die überwiegende Anzahl der Fehlerursachen in einem SoS *transient.* Ein Fehlerursache wird als transient bezeichnet, wenn sie nur kurzzeitig auftritt, eine Datenstruktur beschädigt, aber die zukünftige Funktionsfähigkeit der Hardware nicht beeinträchtigt. Beispiele für transiente Fehlerursachen sind Neutronen aus der Höhenstrahlung, kurzzeitige Störungen in der Stromversorgung oder Heisenbugs [6, p.138] in der Software.

Der erste Schritt in der Fehlerbehandlung ist die Fehlererkennung. Eine klare Trennung der Aufgaben von Verarbeitung und Fehlererkennung ist notwendig, um die Unabhängigkeit der Fehlererkennung von einem fehlerhaften Verarbeitungssystem zu garantieren. Diese Unabhängigkeit ist gewährleistet, wenn die Verarbeitung und die Fehlererkennung in getrennten Fault-Containment Units (FCU) (wie in [6, p.136] ausführlich beschrieben) vorgenommen wird. Im Folgenden wird ein unabhängiges autonomes Subsystem FCU genannt.

In einem großen fehlertoleranten SoS wird zwischen folgenden FCUs unterschieden: (i) *Sensor FCUs (SFCU),* die mittels Sensoren Daten der Umgebung einlesen und diese Daten vorverarbeiten, (ii) *Verarbeitungs FCUs (VFCU),* die Ergebnisse von mehreren Sensor FCUs fusionieren und weiter verarbeiten, (iii) *Ausgabe FCUs* (AFCU), die mittels Aktuatoren Daten an die Umgebung ausgeben, und (iv) *Monitor FCUs* (MFCU), die Ergebnisse der SFCUs, VFCUs und AFCUs überprüfen, um Fehler zu erkennen. Es wird angenommen, dass alle FCUs auf eine globale Zeitbasis zugreifen können. Die FCUs kommunizieren über *Vermittlungseinheiten* ausschließlich mittels Nachrichten. Eine Vermittlungseinheit kann eine eintreffende Nachricht von einer Sender FCU an eine oder mehrere Empfänger FCUs vermitteln. Der Zeitpunkt der Vermittlung einer Nachricht wird *Vermittlungszeitpunkt* der Nachricht genannt.

Ein Verfahren zur Fehlererkennung in einem System-on-Chip (SoC) ist in der WO 2011/003121 A1 geoffenbart.

Es ist eine Aufgabe der Erfindung, anzugeben, wie in einem Echtzeitcomputersystem, insbesondere einen SoS die Parallelisierung von Verarbeitung und Fehlererkennung bei einer gleichlaufenden Verbesserung des Antwortzeitverhaltens realisiert werden kann.

Insbesondere ist es eine Aufgabe der Erfindung, anzugeben, wie in einem großen Echtzeitcomputersystem, insbesondere einem großen SoS, z.B. einem zyklisch arbeitenden verteilten fehlertoleranten SoS die Parallelisierung von Verarbeitung und Fehlererkennung bei einer gleichlaufenden Verbesserung des Antwortzeitverhaltens realisiert werden kann.

Diese Aufgabe wird durch die unabhängigen Patentansprüche 1, 8 und 10 gelöst.

Von Vorteil kann es dabei sein, wenn der mit einer Nachricht assoziierte Kommitmentzeitpunkt in der Nachricht enthalten ist.

Es kann aber auch von Vorteil sein, wenn der mit einer Nachricht assoziierte Kommitmentzeitpunkt aus dem a priori festgelegten zeitgesteuerten Zeitplan der Fault-Containments-Units abgeleitet wird.

Zweckmäßig ist es, wenn zwischen Verarbeitungs-Fault-Containments-Units (VFCUs) und Monitor-Fault-Containments-Units (MFCUs) unterschieden wird, wobei die Nachrichtenverteileinheit eine oder mehrere Nachrichten einer Sensor-Fault-Containments-Unit (SFCU) an eine oder mehrere designierte Verarbeitungs-Fault-Containments-Units und zusätzlich an eine oder mehrere Monitor-Fault-Containments-Units weiterleitet, und wobei eine Monitor-Fault-Containments-Unit den Inhalt der empfangenen Nachrichten überprüft und, falls in einer Nachricht ein Fehler festgestellt wird, vor dem mit der Nachricht assoziierten Kommitmentzeitpunkt eine Fehlernachricht an die eine oder die mehreren designierten Verarbeitungs-Fault-Containments-Units sendet, so dass die eine oder die mehreren designierten Verarbeitungs-Fault-Containments-Units alle von der fehlerhaften Nachricht beeinflussten Resultate vor dem Kommitmentzeitpunkt verwerfen können.

Mit Vorteil ist vorgesehen, dass in einem zyklisch arbeitenden Echtzeitcomputersystem, insbesondere einem zyklisch arbeitenden System-of-Systems eine designierte Verarbeitungs-Fault-Containments-Unit ein in einem Zyklus aufgrund eines Fehlers verworfenes Resultat durch das Resultat des vorangegangen Zyklus ersetzt.

Außerdem kann vorgesehen sein, dass in einem Zyklus eine Vielzahl von Fault-Containments-Units, die Sensordaten übernehmen können, Nachrichten mit dem gleichen Kommitmentzeitpunkt bilden, wobei mehrere oder alle dieser Nachrichten über eine oder mehrere Nachrichtenverteileinheiten an eine oder mehrere Verarbeitungs-Fault-Containments-Units und an eine oder mehrere Monitor-Fault-Containments-Units gesendet werden, und wobei die Verarbeitungs-Fault-Containments-Units keine Resultate, die von einer dieser Nachrichten beeinflusst sind, vor dem mit den Nachrichten assoziierten Kommitmentzeitpunkt an die Umgebung einer Verarbeitungs-Fault-Containments-Unit sendet oder zur Veränderung des inneren Zustands einer Verarbeitungs-Fault-Containments-Unit verwendet.

Weiters kann vorgesehen sein, dass die Verteilereinheit empfangene Nachrichten sofort an die Monitor-Fault-Containments-Units weiterleitet, jedoch die Weiterleitung der Nachrichten an die Verarbeitungs-Fault-Containments-Units bis zum Kommitmentzeitpunkt verzögert, wobei im Falle eines erkannten Fehlers die Monitor-Fault-Containments-Units vor dem Kommitmentzeitpunkt eine Fehlernachricht an die Verteilereinheit senden, so dass die Verteilereinheit die fehlerhaften Nachrichten verwerfen kann und nicht an die Verarbeitungs-Fault-Containments-Units weiterleitet.

Außerdem kann es von Vorteil sein, wenn die eine Fehlernachricht empfangende Verarbeitungs-Fault-Containments-Unit nach einer Analyse der in der Fehlernachricht enthaltenen Beschreibung des Fehlers entscheidet, ob in diesem Zyklus die Resultate an die Umgebung der Verarbeitungs-Fault-Containments-Unit gesendet oder zur permanenten Veränderung des inneren Zustands der Verarbeitungs-Fault-Containments-Unit verwendet werden.

Die Grundidee der vorliegenden Erfindung besteht darin, dass mit einer *Nachricht*, die das Ergebnis einer FCU zur Weiterverarbeitung in der folgenden VFCU transportiert, ein *Kommitmentzeitpunkt* assoziiert wird, welcher angibt, wann Resultate, die von der VFCU auf der Basis der empfangenen Nachricht berechnet werden, frühestens an die Umgebung der VFCU ausgegeben oder in den inneren Zustand der VFCU geschrieben werden dürfen. Eine Nachricht wird zum *Vermittlungszeitpunkt* quasi gleichzeitig an eine oder mehrere VFCUs und MFCUs gesendet. Im Zeitintervall zwischen dem *Vermittlungszeitpunkt* und dem *Kommitmentzeitpunkt* wird die Nachricht von den VFCUs weiterverarbeitet und parallel dazu von der oder den MFCUs überprüft. Wenn eine MFCU einen Fehler erkennt, wird von der MFCU vor dem *Kommitmentzeitpunkt* eine Fehlernachricht an die entsprechende VFCUs gesendet, so dass die VFCUs die fehlerhaften Resultate vor dem *Kommitmentzeitpunkt* verwerfen können. Damit wird verhindert, dass eine Fehlerfortpflanzung in die Umgebung oder in den nächsten Verarbeitungszyklus stattfindet.

Jede FCU ist eingebettet in ein Umfeld, das Nachrichten von dieser FCU empfängt. Der Begriff "Umgebung" einer FCU umfasst somit alle Empfänger von Nachrichten einer gegebenen FCU.

Es wird angenommen, dass jeder Zyklus mit dem Lesen der Sensordaten von einer oder mehreren SFCUs beginnt. Nach Vorverarbeitung der Sensordaten in den SFCUs werden die Ergebnisse in Form von *Nachrichten* an eine oder mehrere VFCUs, MFCUs und schließlich AFCUs weitergeleitet, die die endgültigen Resultate an die Aktuatoren ausgegeben. In jeder FCU wird in jedem Zyklus eine spezielle Datenstruktur verwaltet, in der alle Daten enthalten sind, die von einem Zyklus an den folgenden Zyklus übergeben werden. Diese Datenstruktur, die am Ende jedes Zyklus definiert ist, wird *innerer Zustand* der FCU genannt [6, p.84]. Ein Fehler in der Verarbeitung einer FCU kann nur wirksam werden, wenn von der FCU fehlerhafte Resultate an die Umgebung ausgegeben werden oder wenn ein fehlerhafter innerer Zustand dem folgenden Zyklus der FCU übergeben wird.

Die unabhängige Realisierung von VFCUs und MFCUs wird in einer Anzahl von Patenten angesprochen, z.B. in [1], [3], und [5]. In diesen Patenten beobachten die MFCUs die Ergebnisse der VFCUs ohne sofort zu verhindern, dass ein erkannter Fehler in einer VFCU in der Umgebung der VFCU wirksam wird. Durch die Einführung eines *Kommitmentzeitpunkts* und die Verzögerung der Ausgabe einer VFCU bis zu diesem *Kommitmentzeitpunkt* ermöglicht es die vorliegende Erfindung die Ausbreitung eines erkannten Fehlers in die Umgebung einer VFCU zu verhindern.

Die Erfindung wird an Hand der folgenden, beispielhaften Zeichnung näher erörtert. In dieser zeigt
Fig. 1 ein SoS mit drei Sensor FCUs und einer Verarbeitungs FCU, und
Fig. 2 die Realisierung des Systems von Fig. 1 in einem Multiprocessor System-on-Chip (MPSoC).

Das folgende konkrete Beispiel behandelt eine der vielen möglichen Realisierungen des neuen Verfahrens.

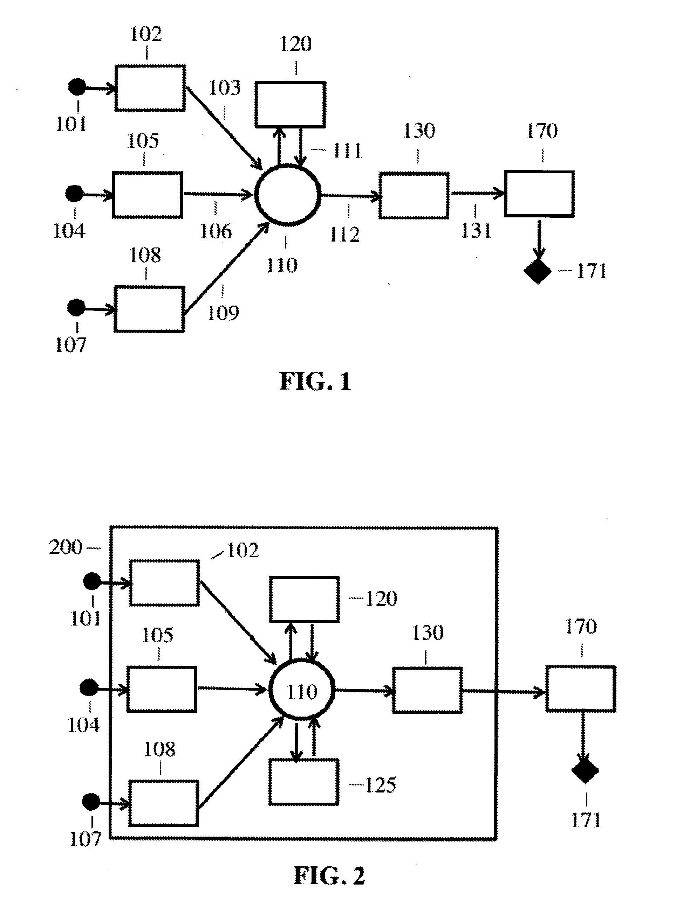

In Fig. 1 ist ein zeitgesteuertes zyklisches SoS mit drei Sensoren **101**, **104**, **107**, einem Aktuator **171**, Sensor FCUS (SFCUs) **102**, **105**, **108**, einer Monitor FCU (MFCU) **120**, einer Verarbeitungs FCU (VFCU) **130**, einer Ausgabe FCU (AFCU) **170** sowie einer Vermittlungseinheit **110** dargestellt. Es wird angenommen, dass alle FCUs auf eine globale Zeit mit bekannter Präzision zugreifen können. Der Aufbau einer solchen globalen Zeit ist in [6, Kapitel 3] genau beschrieben. Der Sensor **101** wird von der SFCU **102**, der Sensor **104** von der SFCU **105** und der Sensor **107** von der SFCU **108** verwaltet. Am Beginn eines neuen Zyklus lesen die SFCUs **102**, **105**, **108** die Sensordaten. Nach der Vorverarbeitung der Sensordaten durch die entsprechenden SFCUs sendet die SFCU **102** eine Nachricht über einen Kanal **103** an die Vermittlungseinheit **110**. Analog sendet die SFCU **105** eine Nachricht über einen Kanal **106** und die SFCU **108** über Kanal **109** eine Nachricht an die Vermittlungseinheit **110**. Die Vermittlungseinheit **110** sendet die Nachrichten zu dem in einem zeitgesteuerten System vorab spezifizierten zyklischen *Vermittlungszeitpunkt* über den Kanal **112** an die VFCU **130** und parallel dazu über den Kanal **111** an die MFCU **120**. Die Vermittlungseinheit **110** kann durch einen TTEthernet Switch, wie in [2], [7] beschrieben, oder durch einen Multirouter [3] realisiert werden. Die Nachricht enthält einen Kommitmentzeitpunkt, der angibt, zu welchem frühesten Zeitpunkt die VFCU **130** ein von den drei Nachrichten beeinflusstes Resultat über den Kanal **131** an die AFCU **170** weiterleiten darf. Die VFCU **130** darf ihren inneren Zustand erst nach dem Kommitmentzeitpunkt neu beschreiben. Alternativ kann in einem zeitgesteuerten System der mit einer Nachricht assoziierte Kommitmentzeitpunkt aus dem a priori festgelegten zyklischen Zeitplan der FCUs abgeleitet werden und *a priori* zum Zeitpunkt des Systemstarts der VFCU **130** und der MFCU **120** mitgeteilt werden. Der Kommitmentzeitpunkt muss dann nicht in der Nachricht enthalten sein.

Nach Empfang der Nachrichten der SFCUs **102**, **105**, **108** führt die VFCU **130** unter Bezugnahme auf ihren aktuellen inneren Zustand eine Sensor Fusion durch und berechnet ein neues Resultat zur Weitergabe an die AFCU **170** und einen neuen inneren Zustand für den nächsten Zyklus. Falls diese Resultate vor dem Kommitmentzeitpunkt vorliegen, wird die Ausgabe der Resultate von der VFCU **130** bis zum Kommitmentzeitpunkt verzögert. Parallel zur Verarbeitung der Nachrichten der drei SFCUs **102**, **105**, **108** in der VFCU **130** überprüft die MFCU **120**, ob die Nachrichten der drei SFCUs **102**, **105**, **108** ein sinnvolles Bild der Umgebung zeichnen oder ob eine oder mehrere der Nachrichten fehlerhaft sind. Ein erkannter Fehler wird in Form einer Fehlernachricht vor dem Kommitmentzeitpunkt über den Kanal **111**, der Vermittlungseinheit **110** und dem Kanal **112** an die VFCU **130** gesendet. Wenn die VFCU eine Fehlernachricht von der MFCU **120** empfängt, so analysiert die VFCU **130** die in der Nachricht enthaltene Fehlerbeschreibung und entscheidet, ob die in diesem Zyklus errechneten Resultate verworfen werden müssen. Im Falle, dass die VFCU **130** die Resultate verwirft, bleibt ihr innerer Zustand unverändert und es wird in diesem Zyklus kein neuer Wert an die AFCU **170** zur Ausgabe an den Aktuator **171** weitergegeben.

In vielen zyklischen Echtzeitanwendungen der Regelungstechnik oder im Multimediabereich wird der Ausfall eines Zyklus durch die Anwendung toleriert. Durch die offengelegte Erfindung wird verhindert, dass ein transienter Fehler durch die Beschädigung des inneren Zustands einer FCU zu einem permanenten Fehler wird oder durch die Ausgabe eines fehlerhaften Resultats ein Schaden in der Umgebung entsteht.

Fig. 2 zeigt eine Realisierung des beschriebenen Verfahrens mittels eines Multiprocessor System on Chip (MPSoC). Der MPSoC **200** beinhaltet die SFCUs **102**, **105**, **108** als IP-cores. Die Vermittlungseinheit **110** ist als Network-on-Chip ausgeführt. Neben der MFCU **120** ist eine weitere MFCU **125** als IP-core realisiert. Die VFCU **130** ist ebenfalls ein eigenständiges IP-core. Die AFCU **170**, die den Aktuator **171** ansteuert, ist als getrenntes Subsystem implementiert. Das neue Verfahren lässt sich somit sehr effizient auf einem MPSoC realisieren und nützt die inhärente Parallelität von MPSoCs.

Das offengelegte Verfahren kann auch in der Verteilereinheit **110** implementiert werden. In diesem Fall werden die Nachrichten der SFCUs **102**, **105**, **108** von der Verteilereinheit sofort an die MFCU **120** weitergeleitet, jedoch wird die Weiterleitung dieser Nachrichten an die VFCU **130** durch die Verteilereinheit **110** bis zum Kommitmentzeitpunkt verzögert. Wenn vor dem Kommitmentzeitpunkt eine Fehlernachricht von der MFCU **120** in der Verteilereinheit **110** eintrifft, so verwirft die Verteilereinheit die noch im Speicher der Verteilereinheit vorhandene Nachrichten der SFCUs **102**, **105**, **108**. In einem zeitgesteuerten System realisiert diese Implementierung die Abstraktion eines *fail-silent* Sensorsystems, d.h. das Sensorsystem sendet entweder richtige Nachrichten oder keine Nachrichten. Eine alternative Implementierung der *fail-silence,* die von Teilen der Industrie verfolgt wird, setzt zu diesem Zweck *self-checking* Hardware ein. Das offengelegte Verfahren hat gegenüber der self-checking Hardware den Vorteil, dass nicht nur digitale Hardwarefehler auf der Hardwareebene, sondern zusätzlich auch die wesentlich häufigeren Fehler der Sensoren und Softwarefehler auf Systemebene erkannt werden können.

Wenn neben den transienten Fehlerursachen auch permanente Hardwarefehler toleriert werden müssen, so ist der Einsatz von redundanter Hardware erforderlich. Entsprechend der spezifizierten Fehlerhypothese müssen die Sensoren, die FCUs, die Vermittlungseinheiten und die Kommunikationskanäle redundant ausgelegt werden. Das offen gelegte Verfahren zur Fehlererkennung und Fehlerbehandlung kann auch beim Einsatz von redundanter Hardware angewendet werden.

Erfahrungsgemäß beansprucht in vielen Echtzeitsystemen die Fehlererkennung einen vergleichbaren Aufwand wie die zur Verarbeitung. Die klare Trennung und Parallelanordnung von Verarbeitungsfunktion und Fehlererkennungsfunktion bietet im Vergleich zur üblichen Serienanordnung innerhalb einer einzigen FCU folgende technische und wirtschaftliche Vorteile:
- Zusätzlich zur offensichtlichen Verkürzung der Antwortzeit wird auch die Zuverlässigkeit verbessert, da die VFCUs verkleinert werden und ein fail-silent Ausfall einer MFCU (die dominante Ausfallart der Hardware) keinen Ausfall der Verarbeitungsfunktion bedingt.
- Die Wahrscheinlichkeit für das Auftreten von korrelierten Fehlern wird reduziert und damit die Sicherheit erhöht.
- Die Parallelanordnung von Verarbeitungsfunktion und Fehlererkennungs-funktion erleichtert eine Implementierung auf einem MPSoC.
- Die Unabhängigkeit der Funktionen reduziert die Systemkomplexität und führt damit zu einer Reduktion der Entwicklungs- und Validierungskosten.

Die vorliegende Erfindung beschreibt ein innovatives Verfahren wie in einem System-of-Systems unter Echtzeitbedingungen die funktionale Verarbeitung und die Fehlererkennung parallelisiert werden können, und wie verhindert werden kann, dass sich ein erkannter Fehler in die Umgebung fortpflanzt. Dies wird durch die Einführung eines mit einem vorläufigen Ergebnis assoziierten Kommitmentzeitpunkts ermöglicht. Die parallel arbeitende unabhängige Fehlererkennung muss vor dem Kommitmentzeitpunkt den Fehler an das Subsystem, das die Ausgabe an die Umgebung vornimmt, melden, so dass ein erkannter Fehler zu keinen falschen Ausgaben an die Umgebung führt.

### Zitierte Literatur:

[1] US 5,793,753
[2] US 7,839,868
[3] US 8,004,993
[4] US Pat Application 20110307741
[5] US Pat Application 20050094674
[6] Kopetz, H. Real-Time Systems, Design Principles for Distributed Embedded Applications. Springer Verlag. 2011.
[7] SAE Standard von TT Ethernet. URL: http://standards.sae.org/as6802

## Patentansprüche

1. Verfahren zur Fehlererkennung in einem Fault-Containments-Units (FCUs) umfassenden verteilten Echtzeitcomputersystem, insbesondere einem fehlertoleranten System-of-Systems (SoS), welches über eine globale Zeitbasis verfügt, wobei
die Fault-Containments-Units mittels Nachrichten über mindestens eine Nachrichtenverteileinheit kommunizieren, und wobei eine Nachrichtenverteileinheit, die eine Nachricht empfängt, die Nachricht an eine oder mehrere parallel arbeitende Fault-Containments-Units weiterleitet, **dadurch gekennzeichnet, dass**
mit einer von einer Fault-Containments-Unit gebildeten Nachricht ein Kommitmentzeitpunkt assoziiert ist, und eine eintreffende Nachricht von der Nachrichtenverteileinheit kopiert und eine Kopie der Nachricht sofort an eine Monitor-Fault-Containments-Unit gesendet wird und eine zweite Kopie der Nachricht bis zu dem mit der Nachricht assoziierten Kommitmentzeitpunkt verzögert wird, bevor die zweite Kopie der Nachricht von der Nachrichtenverteileinheit an die folgende Verarbeitungs-Fault-Containments-Unit gesendet wird.

2. Verfahren nach Anspruch 1, **dadurch gekennzeichnet, dass** der mit einer Nachricht assoziierte Kommitmentzeitpunkt in der Nachricht enthalten ist oder der mit einer Nachricht assoziierte Kommitmentzeitpunkt aus dem a priori festgelegten zeitgesteuerten Zeitplan der Fault-Containments-Units abgeleitet wird.

3. Verfahren nach Anspruch 1 oder 2, **dadurch gekennzeichnet, dass** zwischen Verarbeitungs-Fault-Containments-Units (VFCUs) und Monitor-Fault-Containments-Units (MFCUs) unterschieden wird, wobei die Nachrichtenverteileinheit eine oder mehrere Nachrichten einer Sensor-Fault-Containments-Unit (SFCU) an eine oder mehrere designierte Verarbeitungs-Fault-Containments-Units und zusätzlich an eine oder mehrere Monitor-Fault-Containments-Units weiterleitet, und wobei eine Monitor-Fault-Containments-Unit den Inhalt der empfangenen Nachrichten überprüft und, falls in einer Nachricht ein Fehler festgestellt wird, vor dem mit der Nachricht assoziierten Kommitmentzeitpunkt eine Fehlernachricht an die eine oder die mehreren designierten Verarbeitungs-Fault-Containments-Units sendet, so dass die eine oder die mehreren designierten Verarbeitungs-Fault-Containments-Units alle von der fehlerhaften Nachricht beeinflussten Resultate vor dem Kommitmentzeitpunkt verwerfen können.

4. Verfahren nach einem der Ansprüche 1 bis 3, **dadurch gekennzeichnet, dass** in einem zyklisch arbeitenden Echtzeitcomputersystem, insbesondere einem zyklisch arbeitenden System-of-Systems eine designierte Verarbeitungs-Fault-Containments-Unit ein in einem Zyklus aufgrund eines Fehlers verworfenes Resultat durch das Resultat des vorangegangen Zyklus ersetzt.

5. Verfahren nach einem der Ansprüche 1 bis 4, **dadurch gekennzeichnet, dass** in einem Zyklus eine Vielzahl von Fault-Containments-Units, die Sensordaten übernehmen können, Nachrichten mit dem gleichen Kommitmentzeitpunkt bilden, wobei mehrere oder alle dieser Nachrichten über eine oder mehrere Nachrichtenverteileinheiten an eine oder mehrere Verarbeitungs-Fault-Containments-Units und an eine oder mehrere Monitor-Fault-Containments-Units gesendet werden, und wobei die Verarbeitungs-Fault-Containments-Units keine Resultate, die von einer dieser Nachrichten beeinflusst sind, vor dem mit den Nachrichten assoziierten Kommitmentzeitpunkt an die Umgebung einer Verarbeitungs-Fault-Containments-Unit sendet oder zur Veränderung des inneren Zustands einer Verarbeitungs-Fault-Containments-Unit verwendet.

6. Verfahren nach einem der Ansprüche 1 bis 5, **dadurch gekennzeichnet, dass** die Verteilereinheit empfangene Nachrichten sofort an die Monitor-Fault-Containments-Units weiterleitet, jedoch die Weiterleitung der Nachrichten an die Verarbeitungs-Fault-Containments-Units bis zum Kommitmentzeitpunkt verzögert, wobei im Falle eines erkannten Fehlers die Monitor-Fault-Containments-Units vor dem Kommitmentzeitpunkt eine Fehlernachricht an die Verteilereinheit senden, so dass die Verteilereinheit die fehlerhaften Nachrichten verwerfen kann und nicht an die Verarbeitungs-Fault-Containments-Units weiterleitet.

7. Verfahren nach einem der Ansprüche 1 bis 6, **dadurch gekennzeichnet, dass** die eine Fehlernachricht empfangende Verarbeitungs-Fault-Containments-Unit nach einer Analyse der in der Fehlernachricht enthaltenen Beschreibung des Fehlers entscheidet, ob in diesem Zyklus die Resultate an die Umgebung der Verarbeitungs-Fault-Containments-Unit gesendet oder zur permanenten Veränderung des inneren Zustands der Verarbeitungs-Fault-Containments-Unit verwendet werden.

8. Nachrichtenverteileinheit zur Vermittlung von Nachrichten in einem verteilten Echtzeitcomputersystem, insbesondere einem fehlertoleranten System-of-Systems (SoS), welches Fault-Containments-Units (FCUs) umfasst und welches über eine globale Zeitbasis verfügt, wobei die Fault-Containments-Units mittels Nachrichten über die zumindest eine Nachrichtenverteileinheit kommunizieren, **dadurch gekennzeichnet, dass** mit einer von einer Fault-Containments-Unit gebildeten Nachricht ein Kommitmentzeitpunkt assoziiert ist, und wobei eine Nachrichtenverteileinheit, die eine Nachricht empfängt, die Nachricht an eine oder mehrere parallel arbeitende Fault-Containments-Units weiterleitet, wobei die Nachrichtenverteileinheit dazu eingerichtet ist, eine eintreffende Nachricht zu kopieren und eine Kopie der Nachricht sofort an eine Monitor-Fault-Containments-Unit zu senden und eine zweite Kopie der Nachricht bis zu einem mit der Nachricht assoziierten Kommitmentzeitpunkt zu verzögern, bevor die zweite Kopie der Nachricht von der Nachrichtenverteileinheit an die folgende Verarbeitungs-Fault-Containments-Unit gesendet wird, und wobei eine Verarbeitungs-Fault-Containments-Unit (VFCU) keines ihrer Resultate, die von einer oder mehreren der empfangenen Nachrichten beeinflusst sind, vor dem mit den empfangenen Nachrichten assoziierten Kommitmentzeitpunkten an die Umgebung der Verarbeitungs-Fault-Containments-Unit sendet oder zur Veränderung des inneren Zustands der Verarbeitungs-Fault-Containments-Unit verwendet.

9. Nachrichtenverteileinheit nach Anspruch 8, **dadurch gekennzeichnet, dass** der mit einer Nachricht assoziierte Kommitmentzeitpunkt in der Nachricht enthalten ist oder der mit einer Nachricht assoziierte Kommitmentzeitpunkt aus dem a priori festgelegten zeitgesteuerten Zeitplan der Fault-Containments-Units abgeleitet wird.

10. Verteiltes Echtzeitcomputersystem, insbesondere fehlertolerantes System-of-Systems (SoS), welches Fault-Containments-Units (FCUs) umfasst und welches über eine globale Zeitbasis verfügt, mit zumindest einer Nachrichtenverteileinheit nach Anspruch 8 oder 9 zur Vermittlung von Nachrichten, wobei die Fault-Containments-Units mittels Nachrichten über die zumindest eine Nachrichtenverteileinheit kommunizieren, wobei mit einer von einer Fault-Containments-Unit gebildeten Nachricht ein Kommitmentzeitpunkt assoziiert ist, und wobei eine Nachrichtenverteileinheit, die eine Nachricht empfängt, die Nachricht an eine oder mehrere parallel arbeitende Fault-Containments-Units weiterleitet, **dadurch gekennzeichnet, dass**
die Nachrichtenverteileinheit dazu eingerichtet ist, eine eintreffende Nachricht zu kopieren und eine Kopie der Nachricht sofort an eine Monitor-Fault-Containments-Unit zu senden und eine zweite Kopie der Nachricht bis zu einem mit der Nachricht assoziierten Kommitmentzeitpunkt zu verzögern, bevor die zweite Kopie der Nachricht von der Nachrichtenverteileinheit an die folgende Verarbeitungs-Fault-Containments-Unit gesendet wird, wobei vorzugsweise zwischen Verarbeitungs-Fault-Containments-Units (VFCUs) und Monitor-Fault-Containments-Units (MFCUs) unterschieden wird, wobei die Nachrichtenverteileinheit eine oder mehrere Nachrichten einer Sensor-Fault-Containments-Unit (SFCU) an ein oder mehrere designierte Verarbeitungs-Fault-Containments-Units und zusätzlich an eine oder mehrere Monitor-Fault-Containments-Units weiterleitet, und wobei eine Monitor-Fault-Containments-Unit den Inhalt der empfangenen Nachrichten überprüft und, falls in einer Nachricht ein Fehler festgestellt wird, vor dem mit der Nachricht assoziierten Kommitmentzeitpunkt eine Fehlernachricht an die eine oder die mehreren designierten Verarbeitungs-Fault-Containments-Units sendet, so dass die eine oder die mehreren designierten Verarbeitungs-Fault-Containments-Units alle von der fehlerhaften Nachricht beeinflussten Resultate vor dem Kommitmentzeitpunkt verwerfen können.

11. Echtzeitcomputersystem nach Anspruch 10, **dadurch gekennzeichnet, dass** in einem zyklisch arbeitenden Echtzeitcomputersystem, insbesondere einem zyklisch arbeitenden System-of-Systems eine designierte Verarbeitungs-Fault-Containments-Unit ein in einem Zyklus aufgrund eines Fehlers verworfenes Resultat durch das Resultat des vorangegangen Zyklus ersetzt.

12. Echtzeitcomputersystem nach Anspruch 10 oder 11, **dadurch gekennzeichnet, dass** in einem Zyklus eine Vielzahl von Fault-Containments-Units, die Sensordaten übernehmen können, Nachrichten mit dem gleichen Kommitmentzeitpunkt bilden, wobei mehrere oder alle dieser Nachrichten über eine oder mehrere Nachrichtenverteileinheiten an eine oder mehrere Verarbeitungs-Fault-Containments-Units und an eine oder mehrere Monitor-Fault-Containments-Units gesendet werden, und wobei die Verarbeitungs-Fault-Containments-Units keine Resultate, die von einer dieser Nachrichten beeinflusst sind, vor dem mit den Nachrichten assoziierten Kommitmentzeitpunkt an die Umgebung einer Verarbeitungs-Fault-Containments-Unit sendet oder zur Veränderung des inneren Zustands einer Verarbeitungs-Fault-Containments-Unit verwendet.

13. Echtzeitcomputersystem nach einem der Ansprüche 10 bis 12, **dadurch gekennzeichnet, dass** die Nachrichtenverteileinheit empfangene Nachrichten sofort an die Monitor-Fault-Containments-Units weiterleitet, jedoch die Weiterleitung der Nachrichten an die Verarbeitungs-Fault-Containments-Units bis zum Kommitmentzeitpunkt verzögert, wobei im Falle eines erkannten Fehlers die Monitor-Fault-Containments-Units vor dem Kommitmentzeitpunkt eine Fehlernachricht an die Verteilereinheit senden, so dass die Verteilereinheit die fehlerhaften Nachrichten verwerfen kann und nicht an die Verarbeitungs-Fault-Containments-Units weiterleitet.

14. Echtzeitcomputersystem nach einem der Ansprüche 10 bis 13, **dadurch gekennzeichnet, dass** die eine Fehlernachricht empfangende Verarbeitungs-Fault-Containments-Unit nach einer Analyse der in der Fehlernachricht enthaltenen Beschreibung des Fehlers entscheidet, ob in diesem Zyklus die Resultate an die Umgebung der Verarbeitungs-Fault-Containments-Unit gesendet oder zur permanenten Veränderung des inneren Zustands der Verarbeitungs-Fault-Containments-Unit verwendet werden.

15. Echtzeitcomputersystem nach einem der Ansprüche 10 bis 14 , **dadurch gekennzeichnet, dass** die Monitor-Fault-Containments-Unit den Inhalt der Nachricht sofort überprüft und im Fall einer Fehlererkennung vor dem Kommitmentzeitpunkt eine Fehlermeldung an die Nachrichtenverteileinheit sendet und die Nachrichtenverteileinheit eine fehlerhafte Nachricht verwirft bevor die fehlerhafte Nachricht von der Vermittlungseinheit an die designierte Verarbeitungs-Fault-Containments-Unit gesendet wird.

## Claims

1. A method for fault recognition in a distributed real-time computer system comprising fault containment units (FCUs), more particularly a fault-tolerant system of systems (SoS), which has a global timebase, wherein
the fault containment units communicate by means of messages via at least one message distribution unit, and wherein a message distribution unit that receives a message relays the message to one or more fault containment units operating in parallel, **characterised in that**
a commitment time is associated with a message formed by a fault containment unit, and an incoming message is copied by the message distribution unit, and a copy of the message is transmitted immediately to a monitor fault containment unit, and a second copy of the message is delayed until a commitment time associated with the message before the second copy of the message is transmitted from the message distribution unit to the following processing fault containment unit, and wherein a processing fault containment unit (VFCU) does not transmit any of its results that are influenced by one or more of the received messages to the environment of a processing fault containment unit or use them for changing the inner state of the processing fault containment unit before the commitment times associated with the messages.

2. The method according to Claim 1, **characterised in that** the commitment time associated with a message is contained in the message or the commitment time associated with a message is derived from the time-controlled time schedule, determined *a priori,* of the fault containment units.

3. The method according to Claim 1 or 2, **characterised in that** a distinction is made between processing fault containment units (VFCUs) and monitor fault containment units (MFCUs), wherein the message distribution unit relays one or more messages of a sensor fault containment unit (SFCU) to one or more designated processing fault containment units and additionally to one or more monitor fault containment units, and wherein a monitor fault containment unit examines the content of the received messages and, if a fault is determined in a message, transmits a fault message to the one or more designated processing fault containment units before the commitment time associated with the message, such that the one or more designated processing fault containment units can reject all results influenced by the faulty message before the commitment time.

4. The method according to one of Claims 1 to 3, **characterised in that**, in a cyclically operating real-time computer system, in particular a cyclically operating system of systems, a designated processing fault containment unit replaces a result that is rejected in a cycle due to a fault with the result of the previous cycle.

5. The method according to one of Claims 1 to 4, **characterised in that** a multiplicity of fault containment units, which may take over sensor data, form messages in a cycle that have the same commitment time, wherein some or all of these messages are transmitted via one or more message distribution units to one or more processing fault containment units and to one or more monitor fault containment units, and wherein the processing fault containment units do not transmit any results that are influenced by one of these messages to the environment of a processing fault containment unit or use them for changing the inner state of a processing fault containment unit before the commitment time associated with the messages.

6. The method according to one of Claims 1 to 5, **characterised in that** the distribution unit relays received messages immediately to the monitor fault containment units, but delays the relay of the messages to the processing fault containment units until the commitment time, wherein, in the case of a recognised fault, the monitor fault containment units transmit a fault message to the distribution unit before the commitment time, such that the distribution unit can reject the faulty messages and does not relay them to the processing fault containment units.

7. The method according to one of Claims 1 to 6, **characterised in that** the processing fault containment unit receiving a fault message decides, following analysis of the description of the fault contained in the fault message, whether the results will be transmitted in this cycle to the environment of the processing fault containment unit or will be used to permanently change the inner state of the processing fault containment unit.

8. A message distribution unit for conveying messages in a distributed real-time computer system, more particularly a fault-tolerant system of systems (SoS), which comprises fault containment units (FCUs) and which has a global timebase, wherein the fault containment units communicate by means of messages via the at least one message distribution unit, **characterised in that** a commitment time is associated with a message formed by a fault containment unit, and wherein a message distribution unit that receives a message relays the message to one or more fault containment units operating in parallel, wherein the message distribution unit is designed to copy an incoming message and to transmit a copy of the message immediately to a monitor fault containment unit and to delay a second copy of the message until a commitment time associated with the message before the second copy of the message is transmitted from the message distribution unit to the following processing fault containment unit, and wherein a processing fault containment unit (VFCU) does not transmit any of its results that are influenced by one or more of the received messages to the environment of a processing fault containment unit or use them for changing the inner state of the processing fault containment unit before the commitment times associated with the messages.

9. The message distribution unit according to Claim 8, **characterised in that** the commitment time associated with a message is contained in the message or the commitment time associated with a message is derived from a time-controlled time schedule, determined a *priori,* of the fault containment units.

10. A distributed real-time computer system, more particularly a fault-tolerant system of systems (SoS), which comprises fault containment units (FCUs) and which has a global timebase, comprising at least one message distribution unit according to Claim 8 or 9 for conveying messages, wherein the fault containment units communicate by means of messages via the at least one message distribution unit, wherein a commitment time is associated with a message formed by a fault containment unit, and wherein a message distribution unit that receives a message relays the message to one or more fault containment units operating in parallel, **characterised in that**
the message distribution unit is designed to copy an incoming message and to transmit a copy of the message immediately to a monitor fault containment unit and to delay a second copy of the message until a commitment time associated with the message before the second copy of the message is transmitted from the message distribution unit to the following processing fault containment unit, wherein a distinction is preferably made between processing fault containment units (VFCUs) and monitor fault containment units (MFCUs), wherein the message distribution unit relays one or more messages of a sensor fault containment unit (SFCU) to one or more designated processing fault containment units and additionally to one or more monitor fault containment units, and wherein a monitor fault containment unit examines the content of the received messages and, if a fault is determined in a message, transmits a fault message to the one or more designated processing fault containment units before the commitment time associated with the message, such that the one or more designated processing fault containment units can reject all results influenced by the faulty message before the commitment time.

11. The real-time computer system according to Claim 10, **characterised in that**, in a cyclically operating real-time computer system, in particular a cyclically operating system of systems, a designated processing fault containment unit advantageously replaces a result that is rejected in a cycle due to a fault with the result of the previous cycle.

12. The real-time computer system according to Claim 10 or 11, **characterised in that** a multiplicity of fault containment units, which may take over sensor data, form messages in a cycle that have the same commitment time, wherein some or all of these messages are transmitted via one or more message distribution units to one or more processing fault containment units and to one or more monitor fault containment units, and wherein the processing fault containment units do not transmit any results that are influenced by one of these messages to the environment of a processing fault containment unit or use them for changing the inner state of a processing fault containment unit before the commitment time associated with the messages.

13. The real-time computer system according to one of Claims 10 to 12, **characterised in that** the message distribution unit relays received messages immediately to the monitor fault containment units, but delays the relay of the messages to the processing fault containment units until the commitment time, wherein, in the case of a recognised fault, the monitor fault containment units transmit a fault message to the distribution unit before the commitment time, such that the distribution unit can reject the faulty messages and does not relay them to the processing fault containment units.

14. The real-time computer system according to one of Claims 10 to 13, **characterised in that** the processing fault containment unit receiving a fault message decides, following analysis of the description of the fault contained in the fault message, whether the results will be transmitted in this cycle to the environment of the processing fault containment unit or will be used to permanently change the inner state of the processing fault containment unit.

15. The real-time computer system according to one of Claims 10 to 14, **characterised in that** the monitor fault containment unit checks the content of the message immediately and transmits a fault message to the message distribution unit in the case of a fault recognition before the commitment time, and the message distribution unit rejects a faulty message before the faulty message is transmitted by the switching unit to the designated processing fault containment unit.

## Revendications

1. Procédé servant à identifier des erreurs dans un système informatique distribué en temps réel comprenant des unités de confinement d'erreurs (FCU), en particulier un système de systèmes (SoS) tolérant les erreurs, lequel dispose d'une base temporelle mondiale, sachant que
les unités de confinement d'erreurs communiquent au moyen de messages par l'intermédiaire au moins d'une unité de distribution de messages, et sachant qu'une unité de distribution de messages, qui reçoit un message, transfère le message à une ou à plusieurs unités de confinement d'erreurs fonctionnant en parallèle, **caractérisé en ce que**
un instant d'engagement est associé à un message formé par une unité de confinement d'erreurs, **en ce qu'**un message entrant est copié par l'unité de distribution de messages et qu'une copie du message est immédiatement envoyée à une unité de confinement d'erreurs de suivi, et **en ce qu'**une deuxième copie du message est retardée jusqu'au moment d'engagement associé au message avant que la deuxième copie du message ne soit envoyée par l'unité de distribution de messages à l'unité de confinement d'erreurs de traitement qui suit,
et sachant qu'une unité de confinement d'erreurs de traitement (VFCU) n'envoie aucun de ses résultats influencés par un ou par plusieurs des messages reçus avant le moment d'engagement associé aux messages reçus à l'environnement de l'unité de confinement d'erreurs de traitement ni ne les utilise aux fins de la modification de l'état interne de l'unité de confinement d'erreurs de traitement.

2. Procédé selon la revendication 1, **caractérisé en ce que** le moment d'engagement associé à un message est contenu dans le message, ou **en ce que** le moment d'engagement associé à un message est déduit d'un calendrier de planification, commandé de manière temporelle fixé a priori, des unités de confinement d'erreurs.

3. Procédé selon la revendication 1 ou 2, **caractérisé en ce qu'**on distingue les unités de confinement d'erreurs de traitement (VFCU) et les unités de confinement d'erreurs de suivi (MFCU), sachant que l'unité de distribution de messages transfère un ou plusieurs messages d'une unité de confinement d'erreurs de capteur (SFCU) à une ou plusieurs unités de confinement d'erreurs de traitement désignées et, en supplément, à une ou plusieurs unités de confinement d'erreurs de suivi, et sachant qu'une unité de confinement d'erreurs de suivi vérifie le contenu des messages reçus et que, si une erreur est constatée dans un message, un message d'erreur est envoyé à l'une ou plusieurs unités de confinement d'erreurs de traitement désignées avant le moment d'engagement associé au message de sorte que l'une ou les nombreuses unités de confinement d'erreurs de traitement désignées peuvent rejeter tous les résultats influencés par le message erroné avant le moment d'engagement.

4. Procédé selon l'une quelconque des revendications 1 à 3, **caractérisé en ce qu'**une unité de confinement d'erreurs de traitement désignée remplace un résultat rejeté lors d'un cycle du fait d'une erreur par le résultat du cycle précédent dans un système informatique distribué en temps réel fonctionnant de manière cyclique, en particulier dans un système de systèmes fonctionnant de manière cyclique.

5. Procédé selon l'une quelconque des revendications 1 à 4, **caractérisé en ce qu'**une pluralité d'unités de confinement d'erreurs, qui peuvent prendre en charge des données de capteur, forment des messages pourvus du même moment d'engagement lors d'un cycle, sachant que plusieurs messages ou l'intégralité de ces messages sont envoyés par l'intermédiaire d'une ou de plusieurs unités de distribution de messages à une ou à plusieurs unités de confinement d'erreurs de traitement et à une ou à plusieurs unités de confinement d'erreurs de suivi, et sachant que les unités de confinement d'erreurs de traitement n'envoient aucun résultat influencé par l'un desdits messages avant le moment d'engagement associé aux messages à l'environnement d'une unité de confinement d'erreurs de traitement ni ne les utilisent aux fins de la modification de l'état interne d'une unité de confinement d'erreurs de traitement.

6. Procédé selon l'une quelconque des revendications 1 à 5, **caractérisé en ce que** l'unité de distribution transfère immédiatement des messages reçus aux unités de confinement d'erreurs de suivi, **en ce que** toutefois le transfert des messages aux unités de confinement d'erreurs de traitement est retardé jusqu'au moment d'engagement, sachant que dans le cas d'une erreur identifiée, les unités de confinement d'erreurs de suivi envoient avant le moment d'engagement un message d'erreur à l'unité de distribution de sorte que l'unité de distribution peut rejeter les messages erronés et ne les transfère pas aux unités de confinement d'erreurs de traitement.

7. Procédé selon l'une quelconque des revendications 1 à 6, **caractérisé en ce que** l'unité de confinement d'erreurs de traitement recevant un message d'erreur décide après une analyse de la description de l'erreur contenue dans le message d'erreur si lors dudit cycle les résultats sont envoyés à l'environnement des unités de confinement d'erreurs de traitement ou sont utilisés aux fins de la modification permanente de l'état interne de l'unité de confinement d'erreurs de traitement.

8. Unité de distribution de messages servant à la transmission de messages dans un système informatique distribué en temps réel, en particulier dans un système de systèmes (SoS) tolérant les erreurs, qui comprend des unités de confinement d'erreurs (FCU) et qui dispose d'une base temporelle mondiale, sachant que les unités de confinement d'erreurs communiquent au moyen de messages par l'intermédiaire de l'unité de distribution de messages ou des unités de distribution de messages, **caractérisée en ce qu'**un moment d'engagement est associé à un message formé par une unité de confinement d'erreurs et sachant qu'une unité de distribution d'erreurs qui reçoit un message transfère le message à une ou à plusieurs unités de confinement d'erreurs fonctionnant en parallèle, sachant que l'unité de distribution de messages est mise au point pour copier un message entrant et pour envoyer une copie du message immédiatement à une unité de confinement d'erreurs de suivi et pour retarder une deuxième copie du message jusqu'à un moment d'engagement associé au message avant que la deuxième copie du message ne soit envoyée par l'unité de distribution de messages à l'unité de confinement d'erreurs de traitement qui suit,
et sachant qu'une unité de confinement d'erreurs de traitement (VFCU) n'envoie aucun de ses résultats influencés par un ou par plusieurs des messages reçus avant le moment d'engagement associé aux messages reçus à l'environnement de l'unité de confinement d'erreurs de traitement ni ne les utilise aux fins de la modification de l'état interne de l'unité de confinement d'erreurs de traitement.

9. Unité de distribution de messages selon la revendication 8, **caractérisée en ce que** le moment d'engagement associé à un message est contenu dans le message, ou **en ce que** le moment d'engagement associé à un message est déduit du calendrier de planification, commandé de manière temporelle fixé a priori, des unités de confinement d'erreurs.

10. Système informatique distribué en temps réel, en particulier système de systèmes (SoS) tolérant les erreurs, qui comprend des unités de confinement d'erreurs (FCU) et qui dispose d'une base temporelle mondiale, comprenant au moins une unité de distribution de messages selon la revendication 8 ou 9 servant à la communication de messages, sachant que les unités de confinement d'erreurs communiquent au moyen de messages par l'intermédiaire de l'unité de distribution de messages ou des unités de distribution de message, sachant qu'un moment d'engagement est associé à un message formé par une unité de confinement d'erreurs, et sachant qu'une unité de distribution de messages qui reçoit un message transfère le message à une ou à plusieurs unités de confinement d'erreurs fonctionnant en parallèle, **caractérisé en ce que**
l'unité de distribution de messages est mise au point pour copier un message entrant et pour envoyer immédiatement une copie du message à une unité de confinement d'erreurs de suivi et pour retarder une deuxième copie du message jusqu'à un moment d'engagement associé au message, avant que la deuxième copie du message ne soit envoyée par l'unité de distribution de messages à l'unité de confinement d'erreurs de traitement qui suit, sachant que de préférence on distingue des unités de confinement d'erreurs de traitement (VFCU) et des unités de confinement d'erreurs de suivi (MFCU), sachant que l'unité de distribution de messages transfère un ou plusieurs messages d'une unité de confinement d'erreurs de capteur (SFCU) à une ou à plusieurs unités de confinement d'erreurs de traitement désignées et, en supplément, à une ou à plusieurs des unités de confinement d'erreurs de suivi, et sachant qu'une unité de confinement d'erreurs de suivi vérifie le contenu des messages reçus et, si une erreur est constatée dans un message, un message d'erreur est envoyé à l'une des unités de confinement d'erreurs de traitement ou aux nombreuses unités de confinement d'erreurs de traitement désignées avant le moment d'engagement associé au message de sorte que l'une des unités de confinement d'erreurs de traitement ou les nombreuses unités de confinement d'erreurs de traitement désignées peuvent rejeter tous les résultats influencés par le message erroné avant le moment d'engagement.

11. Système informatique en temps réel selon la revendication 10, **caractérisé en ce qu'**une unité de confinement d'erreurs de traitement désignée remplace un résultat rejeté lors d'un cycle du fait d'une erreur par le résultat du cycle précédent dans un système informatique en temps réel fonctionnant de manière cyclique, en particulier dans un système de systèmes fonctionnant de manière cyclique.

12. Système informatique en temps réel selon la revendication 10 ou 11, **caractérisé en ce qu'**une pluralité d'unités de confinement d'erreurs, qui peuvent prendre en charge des données de capteur, forment des messages pourvus du même moment d'engagement lors d'un cycle, sachant que plusieurs messages ou l'ensemble desdits messages sont envoyés par l'intermédiaire d'une ou de plusieurs unités de distribution de messages à une ou à plusieurs unités de confinement d'erreurs de traitement et à une ou à plusieurs unités de confinement d'erreurs de suivi, et sachant que les unités de confinement d'erreurs de traitement n'envoient aucun résultat influencé par l'un desdits messages, avant le moment d'engagement associé aux messages, à l'environnement d'une unité de confinement d'erreurs de traitement ni ne les utilisent aux fins de la modification de l'état interne d'une unité de confinement d'erreurs de traitement.

13. Système informatique en temps réel selon l'une quelconque des revendications 10 à 12, **caractérisé en ce que** l'unité de distribution de messages transfère immédiatement des messages reçus aux unités de confinement d'erreurs de suivi, **en ce que** toutefois le transfert des messages aux unités de confinement d'erreurs de traitement est retardé jusqu'au moment d'engagement, sachant que dans le cas d'une erreur identifiée, les unités de confinement d'erreurs de suivi envoient, avant le moment d'engagement, un message d'erreur à l'unité de distribution de sorte que l'unité de distribution peut rejeter les messages erronés et ne les transfère pas aux unités de confinement d'erreurs de traitement.

14. Système informatique en temps réel selon l'une quelconque des revendications 10 à 13, **caractérisé en ce que** l'unité de confinement d'erreurs de traitement recevant un message d'erreur décide après une analyse de la description de l'erreur contenue dans le message d'erreur si lors dudit cycle, les résultats sont envoyés à l'environnement de l'unité de confinement d'erreurs de traitement ou sont utilisés aux fins de la modification permanente de l'état interne de l'unité de confinement d'erreurs de traitement.

15. Système informatique en temps réel selon l'une quelconque des revendications 10 à 14, **caractérisé en ce que** l'unité de confinement d'erreurs de suivi vérifie immédiatement le contenu du message et dans le cas d'une identification d'erreur envoie une alerte d'erreur à l'unité de distribution de messages avant le moment d'engagement, et **en ce que** l'unité de distribution de messages rejette un message erroné avant que le message erroné ne soit envoyé par l'unité de transmission à l'unité de confinement d'erreurs de traitement désignée.
